(19) Europäisches Patentamt
European Patent Office
Office européen des brevets

(11) **EP 4 431 454 A1**

(12) **DEMANDE DE BREVET EUROPEEN**

(43) Date de publication:
**18.09.2024   Bulletin 2024/38**

(21) Numéro de dépôt: **24163470.8**

(22) Date de dépôt: **14.03.2024**

(51) Classification Internationale des Brevets (IPC):
***C01B 33/021*** *(2006.01)*   ***C01B 33/037*** *(2006.01)*

(52) Classification Coopérative des Brevets (CPC):
**C01B 33/021; C01B 33/037**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité:   **15.03.2023   FR 2302409**

(71) Demandeur: **HPQ Silicium Inc.**
**Montreal, Québec H1Y 3R8 (CA)**

(72) Inventeurs:
• **KRAIEM, Jed**
**69008 LYON (FR)**
• **NICHIPORUK, Oleksiy**
**69780 MIONS (FR)**
• **DEGOULANGE, Julien**
**69230 SAINT GENIS LAVAL (FR)**

(74) Mandataire: **Be IP**
**Cabinet LTL SAS**
**Centre d'Entreprise et d'Innovation**
**56, Bd Niels Bohr**
**CS 52132**
**69603 Villeurbanne Cedex (FR)**

(54) **APPAREIL ET PROCÉDÉ DE PRODUCTION DE SILICIUM DE PURETÉ 3N OU SUPÉRIEURE PAR PURIFICATION D'UN SILICIUM DE PURETÉ 2N**

(57)     La présente invention concerne un appareil pour la production de silicium de pureté 3N par purification d'un silicium de pureté 2N, la purification incluant les étapes d'injection d'air (E1), de filtrage (E2) et de solidification (E3) pour obtenir le silicium de pureté 3N à l'état solide.

EP 4 431 454 A1

## Description

### DOMAINE DE L'INVENTION

La présente invention concerne le domaine technique général de la purification de silicium généré à partir de quartz afin d'obtenir un silicium de pureté 3N ou supérieure (4N, 5N, 6N, etc.).

Notamment, l'invention est relative à des procédés de traitement de silicium produit par carboréduction de quartz dans un four à arc électrique.

### ARRIERE PLAN DE L'INVENTION

#### 1. Généralités

La production de silicium métallique est généralement basée sur la réduction carbothermique de quartz à haute température et à pression atmosphérique. Cette réduction carbothermique de quartz peut être réalisée en réduisant chimiquement le quartz en présence de réducteurs à base de carbone dans un four à arc électrique où un arc à haute température chauffe les réactifs (quartz et réducteurs).

Ceci permet de produire un silicium dit « *de grade métallurgique* » (ou « *MG-Si* » sigle de l'expression anglo-saxonne *"Metallurgical Grade Silicon')* ayant une pureté de 99% (ou « *2N* » pour le nombre total de « *9* »).

Le silicium de grade métallurgique peut être utilisé :

- en tant qu'élément d'alliage - par exemple dans l'industrie de l'aluminium et de l'acier - ou
- en tant que précurseur - par exemple dans l'industrie photovoltaïque (panneaux solaires), pour les silicones et pour le stockage d'énergie.

Les évolutions technologiques dans les domaines du photovoltaïque et du stockage d'énergie ont conduit le silicium de grade métallurgique à devenir un matériau stratégique. Par conséquent, l'approvisionnement en silicium de grade métallurgique de grande pureté à un coût raisonnable est devenu une nécessité.

Par ailleurs, de plus en plus de technologies ont besoin de disposer d'un silicium de pureté 99.9% (3N) et 99.99% (4N), voire 99.999% (5N).

Or, l'un des inconvénients des dispositifs et procédés de production de silicium métallurgique conventionnels la teneur élevée en impuretés contenues dans le silicium métallurgique produit.

#### 2. Solutions de purification existantes pour les procédés de production conventionnels

Pour limiter la teneur élevée en impuretés contenues dans le silicium produit à partir des dispositif et procédé conventionnels, il existe différentes solutions.

Une première solution consiste à utiliser une matière première (quartz) présentant une pureté élevée. Toutefois, cette solution augmente le coût de production du silicium.

Une deuxième solution consiste à mettre en oeuvre des traitements acides postérieurement à la production de silicium de pureté 2N, afin d'obtenir du silicium de pureté 3N ou supérieure. De tels traitements acides permettent en effet de dissoudre les impuretés présentes aux joints de grain du silicium de pureté 2N obtenu à partir des dispositifs et procédés de production de silicium métallurgique conventionnels. Toutefois, des inconvénients d'une telle solution concernent son coût élevé, ainsi que son empreinte environnement défavorable, du fait de l'utilisation d'acide(s) toxique(s). En effet, la mise en oeuvre d'un post-traitement à base d'acides nécessite des installations adaptées spécifiques. Par ailleurs, le traitement des gaz et effluents produits - lors de la soumission du silicium de pureté 2N à une attaque acide - est couteux en raison des règles environnementales.

Une troisième solution consiste à réaliser, postérieurement à la production de silicium de pureté 2N :

- une étape de solidification directionnelle pour obtenir un lingot de silicium, et
- une étape d'éboutage consistant à retirer la partie supérieure du lingot et ne conserver que la partie inférieure de plus grande pureté.

L'étape de solidification directionnelle permet, par ségrégation, de concentrer les impuretés dans la partie supérieure du lingot de silicium issu de la solidification directionnelle. L'étape d'éboutage permet de retirer cette partie supérieure pour ne conserver que la partie inférieure de pureté 3N ou supérieure. Toutefois, un inconvénient d'une telle solution est que l'étape de solidification directionnelle est très lente.

#### 3. Procédé selon US 11 267 714 et but de la présente invention

Le document US 11 267 714 propose une autre solution consistant à mettre en oeuvre la réduction carbothermique du quartz à haute température sous vide.

En référence à la figure 1, l'appareil selon US 11 267 714 comprend un four à arc FA électrique et une enceinte E fermée étanche contenant le four à arc FA. Cet agencement (enceinte E étanche contenant le four à arc FA) permet de contrôler la pression à laquelle la réduction carbothermique du quartz est mise en oeuvre

Le fait de réaliser la réduction carbothermique du quartz sous vide permet de favoriser l'évaporation des impuretés présentes dans les réactifs (quartz et réducteurs) ainsi que dans le silicium de grade métallurgique liquide nouvellement produit.

Un but de la présente invention est de proposer un procédé de purification du silicium produit selon la technique décrite dans US 11 267 714.

Notamment, un but de la présente invention est de proposer une (ou plusieurs) amélioration(s) à l'appareil selon US 11 267 714 pour faciliter son utilisation à l'échelle industrielle dans le cadre de la production de silicium de pureté 3N ou supérieure.

**BREVE DESCRIPTION DE L'INVENTION**

A cet effet, l'invention propose un appareil pour la production du silicium de pureté 3N ou supérieure, l'appareil comprenant un dispositif de production de silicium de pureté 2N incluant :

- une enceinte étanche raccordée à au moins une pompe d'aspiration pour générer une dépression à l'intérieur de l'enceinte lorsque la pompe d'aspiration est activée,
- un four à arc électrique logé à l'intérieur de l'enceinte étanche, le four à arc incluant une cuve pour contenir un mélange de matières premières, et un ensemble d'électrodes configurées pour chauffer ledit mélange afin de produire le silicium de pureté 2N,

*remarquable en ce que* l'appareil comprend en outre un dispositif de purification pour l'obtention de silicium de pureté 3N, ledit dispositif de purification comportant une poche de coulée et un brasseur électromagnétique en aval de la poche de coulée :

- la poche de coulée incluant :

  o un réservoir adapté pour contenir un bain de silicium à l'état liquide, ledit bain étant composé du silicium de pureté 2N issu du dispositif de production,
  o une buse d'injection pour injecter un gaz dans le bain de silicium à l'état liquide, l'injection du gaz permettant d'obtenir un silicium liquide affiné ayant une pureté supérieure au silicium de pureté 2N issu du dispositif de production,
  o un filtre disposé en amont du brasseur électromagnétique pour filtrer le silicium liquide affiné, le filtrage permettant d'obtenir un silicium liquide filtré ayant une pureté supérieure au silicium liquide affiné, et

- le brasseur électromagnétique étant configuré pour recevoir le silicium filtré liquide et pour le solidifier à une vitesse de solidification supérieure ou égale à 5 cm/h, préférentiellement supérieure ou égale à 10 cm/h, la solidification permettant d'obtenir une cloche de silicium solide purifié formant le silicium de pureté 3N ou supérieure.

Des aspects préférés mais non limitatifs de l'appareil selon l'invention sont les suivants :

- le brasseur électromagnétique peut comprendre un agitateur mécanique et/ou un brasseur inductif pour induire un déplacement du silicium filtré liquide à une vitesse supérieure ou égale à 1 m.s ;
- le filtre peut comprendre des pores dont les dimensions sont comprises entre 75 micromètres et 3 millimètres, préférentiellement entre 100 micromètres et 2.5 millimètres, et encore plus préférentiellement entre 500 micromètres et 2 millimètres ;
- la poche de coulée peut inclure en outre un système de chauffage configuré pour maintenir le bain de silicium à l'état liquide contenu dans le réservoir à une température supérieure ou égale à 1600°C, préférentiellement supérieure ou égale à 1700°C ;
- la buse peut être alimentée en gaz par une source d'alimentation configurée pour injecter ledit gaz à un débit compris entre 2 et 10m$^3$/h ;
- le brasseur électromagnétique peut être dépourvu d'isolant thermique pour induire le refroidissement du bloc de silicium solide purifié à une vitesse comprise entre 150°C/h et 500°C/h, préférentiellement comprise entre 200°C/h et 300°C/h ;
- le dispositif de production de silicium de pureté 2N peut également comprendre une unité de contrôle configurée pour :

  ◦ lors d'une étape de prétraitement :

    ▪ diminuer la pression à l'intérieur de l'espace clos à une valeur inférieure à la pression atmosphérique,
    ▪ mettre en oeuvre un chauffage résistif du mélange de matières premières,

  o lors d'une étape de carboréduction :

    ▪ augmenter la pression à l'intérieur de l'espace clos à une valeur sensiblement égale à la pression atmosphérique,
    ▪ mettre en oeuvre un chauffage par arc électrique du mélange de matières premières,
    ▪ puis lorsque la température du mélange est supérieure à 2000°C :

    • maintenir la pression à l'intérieur de l'espace clos à la valeur sensiblement égale à la pression atmosphérique,
    • maintenir le chauffage par arc électrique du mélange de matières premières,

  ◦ lors d'une étape de posttraitement :

    ▪ diminuer la pression à l'intérieur de l'espace clos à une valeur inférieure à la pression atmosphérique.

L'invention concerne également un procédé pour la production de silicium de pureté 3N ou supérieure, le procédé comprenant :

- une phase de production de silicium de pureté 2N à partir d'un dispositif de production incluant une enceinte étanche raccordée à une pompe d'aspiration, et un four à arc électrique logé à l'intérieur de l'enceinte étanche, la phase de production comportant les étapes suivantes :

    ○ charger une cuve du four à arc électrique avec un mélange de matières premières,
    ○ générer une dépression à l'intérieur de l'enceinte en activant la pompe d'aspiration,
    o chauffer le mélange en utilisant un ensemble d'électrodes du four à arc de sorte à produire le silicium de pureté 2N,

*remarquable en ce que* le procédé comprend en outre et une phase de purification pour l'obtention du silicium de pureté 3N à partir d'un dispositif de purification incluant une poche de coulée et un brasseur électromagnétique en aval de la poche de coulée, ladite phase de purification comportant les étapes suivantes :

- d'injection, en utilisant une buse d'injection de la poche de coulée, d'un gaz dans un bain de silicium à l'état liquide composé du silicium de pureté 2N issu du dispositif de production, ledit bain étant contenu dans un réservoir de la poche de coulée, l'injection du gaz permettant d'obtenir un silicium liquide affiné ayant une pureté supérieure au silicium de pureté 2N issu du dispositif de production,
- de filtrage, en utilisant un filtre disposé en amont du brasseur électromagnétique, du silicium liquide affiné pour obtenir un silicium liquide filtré ayant une pureté supérieure au silicium liquide affiné, et
- de solidification, en utilisant le brasseur électromagnétique, du silicium filtré liquide à une vitesse de solidification supérieure ou égale à 5 cm/h, préférentiellement supérieure ou égale à 10 cm/h.

Des aspects préférés mais non limitatifs du procédé selon l'invention sont les suivants :

- l'étape de solidification peut comprendre une sous-étape consistant à brasser le silicium filtré liquide à une vitesse supérieure ou égale à 1 m.s ;
- l'étape de filtrage peut consister à faire circuler le silicium liquide affiné au travers d'un filtre ayant des pores dont les dimensions sont comprises entre 75 micromètres et 3 millimètres, préférentiellement entre 100 micromètres et 2.5 millimètres, et encore plus préférentiellement entre 500 micromètres et 2 millimètres ;
- durant l'étape d'injection, le gaz peut être injecté dans le bain de silicium liquide à un débit comprise entre 2 et 10$m^3$/h ;

- la phase de production de silicium de pureté 2N peut comprendre les étapes suivantes :

    o une étape de prétraitement incluant les sous-étapes consistant à :

        ▪ diminuer la pression à l'intérieur de l'enceinte à une valeur inférieure à la pression atmosphérique,
        ▪ mettre en oeuvre un chauffage résistif du mélange de matières premières,

    ○ une étape de carboréduction incluant les sous-étape consistant à :

        ▪ augmenter la pression à l'intérieur de l'espace clos à une valeur sensiblement égale à la pression atmosphérique,
        ▪ mettre en oeuvre un chauffage par arc électrique du mélange de matières premières,
        ▪ puis lorsque la température du mélange est supérieure à 1500°C :

        • maintenir la pression à l'intérieur de l'espace clos à la valeur sensiblement égale à la pression atmosphérique,
        • maintenir le chauffage par arc électrique du mélange de matières premières,

    ○ une étape de posttraitement incluant une sous-étape consistant à diminuer la pression à l'intérieur de l'espace clos.

## BRÈVE DESCRIPTION DES DESSINS

D'autres avantages et caractéristiques du procédé de production de silicium selon l'invention ressortiront mieux de la description qui va suivre de plusieurs variantes d'exécution, données à titre d'exemples non limitatifs, à partir des dessins annexés sur lesquels :

- La figure 1 est une représentation schématique d'un dispositif de production de silicium de pureté 2N de l'art antérieur,
- La figure 2 est un schéma de principe d'un appareil de production de silicium de pureté 3N ou supérieure incluant un dispositif de production de silicium de pureté 2N et un dispositif de purification pour l'obtention de silicium de pureté 3N,
- La figure 3 est une représentation schématique de différentes phases d'un procédé de production de silicium à partir du dispositif de production illustré à la figure 2,
- La figure 4 est une représentation schématique illustrant un front de séparation entre une phase liquide et une phase solide,

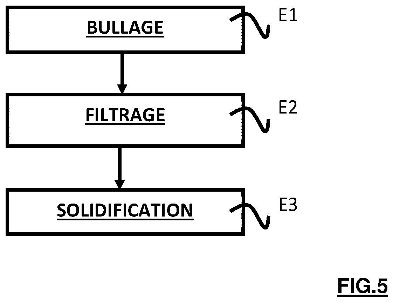

- La figure 5 est une représentation schématique de différentes phases d'un procédé de production de silicium de pureté 3N.

## DESCRIPTION DETAILLEE DE L'INVENTION

On va maintenant décrire différents exemples de réalisation de l'invention en référence aux figures. Dans ces différentes figures, les éléments équivalents sont désignés par la même référence numérique.

### 1. Généralités

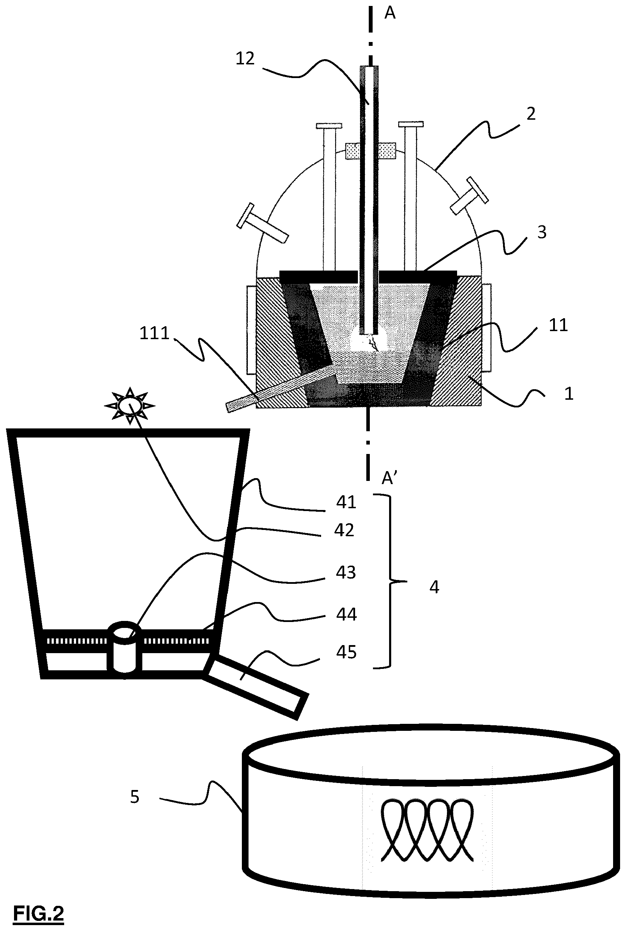

En référence à la figure 2, l'appareil selon l'invention comprend :

- un dispositif de production de silicium de pureté 2N, et
- un dispositif de purification du silicium de pureté 2N (produit par le dispositif de production) pour obtenir du silicium de pureté 3N ou supérieure.

### 2. Dispositif de production de silicium

Le dispositif de production de silicium comprend :

- un four à arc électrique 1,
- une enceinte 2 étanche, et éventuellement
- un couvercle 3 adapté pour coiffer une cuve 11 du four à arc électrique 1, le four à arc 1 et le couvercle 3 étant logés dans l'enceinte 2.

### 2.1. Four à arc

Le four 1 à arc permet :

- d'une part de contenir les réactifs - à savoir le quartz et les réducteurs - pour la production de silicium de pureté 2N, et
- d'autre part de chauffer à haute température lesdits réactifs pour induire la réaction de réduction carbothermique du quartz.

Le four à arc 1 comprend notamment la cuve 11 et des électrodes 12.

La cuve 11 est destinée à contenir les réactifs, mais également le silicium liquide issu de la réaction de réduction carbothermique du quartz. La cuve comporte un fond, une (ou plusieurs) paroi(s) latérale(s), et une ouverture supérieure (recouverte par le couvercle 3 sur la figure 2) opposée au fond.

On note A-A', un axe central longitudinal du dispositif qui est vertical lorsque le dispositif est posé sur une surface plane horizontale. La (ou l'ensemble composé des) paroi(s) latérale(s) du four à arc 1 est sensiblement centrée (centré) sur l'axe A-A'.

Dans la suite, la description est détaillée en considérant que les termes « supérieur » et « haut » correspondent à une direction globalement parallèle à l'axe A-A' et allant du fond vers l'ouverture de la cuve 1, tandis que les termes « inférieur » et « bas » correspondent à une direction opposée.

La cuve 11 comporte également un canal (ou plusieurs canaux) de coulée 111 pour l'évacuation du silicium de grade métallurgique produit (à l'état liquide) vers le dispositif de purification. Un système d'obturation - tel qu'un clapet ou une busette ou un bouchon en matériau carboné - peut être prévu pour la fermeture du canal (ou des canaux) de coulée 111 durant la réaction de réduction carbothermique du quartz. Au moment de la coulée, la cuve 11, qui peut être montée par exemple sur un berceau basculant, est inclinée en direction de la poche de coulée de sorte à envoyer progressivement le silicium de grade métallurgique à l'état liquide à travers le canal (ou les canaux) de coulée. Le canal (ou les canaux) de coulée 111 étant alors ouvert(s), le silicium de grade métallurgique liquide peut alors s'écouler hors de la cuve et être recueilli dans la poche de coulée. Bien entendu, d'autres configurations sont possibles pour permettre l'extraction du silicium de grade métallurgique. Par exemple, le fond du récipient peut présenter une pente non nulle en direction du canal (ou des canaux) de coulée de sorte à envoyer le silicium de grade métallurgique vers la poche de coulée lorsque le système d'obturation est retiré du canal (méthode connue sous le terme "tapping" en langue anglaise).

Les électrodes 12 peuvent être alimentées soit à partir d'une source de courant continu ou à partir d'une source de courant alternatif. Ces électrodes 12 permettent la formation d'un arc électrique permettant le chauffage des réactifs (quartz et réducteur) pour induire la production de silicium de pureté 2N.

De préférence, les électrodes 12 sont placées dans l'axe du four à arc 1 de sorte à être sollicitées d'une façon relativement symétrique. Plus précisément, chaque électrode 12 peut consister en une barre cylindrique de graphite s'étendant verticalement.

### 2.2. Enceinte

L'enceinte 2 étanche permet de définir un espace clos dans lequel il est possible de générer une dépression, c'est-à-dire un espace dans lequel il est possible de diminuer la pression à une valeur inférieure à la pression atmosphérique.

Une telle enceinte 2 peut présenter différentes formes et être réalisée à partir de différents matériaux pour assurer cette fonction. Ainsi, on entend, dans le cadre de la présente invention, par « enceinte étanche », un caisson composé d'au moins une paroi - par exemple en acier - de part et d'autre de laquelle il existe une différence de pression. Ainsi, l'enceinte étanche permet de délimiter deux zones (i.e. une zone interne et une zone externe) entre lesquelles existe une différence de pression.

L'enceinte 2 étanche comprend un (ou plusieurs) orifice(s) traversant(s), éventuellement pour le passage :

- d'un (ou de plusieurs) canal (canaux) d'injection de gaz dans l'enceinte 2, chaque canal pouvant être connecté à une source d'alimentation en gaz (tel que de l'argon),
- d'un (ou de plusieurs) canal (canaux) d'aspiration de gaz contenus dans l'enceinte 2, chaque canal pouvant être connecté à une pompe d'aspiration pour permettre la génération d'une dépression à l'intérieur de l'enceinte 2,
- des électrodes 12,
- d'un (ou de plusieurs) conduit(s) d'alimentation du four à arc 1 en réactifs R (quartz, réducteurs, etc.).
- de moyens de connexion électrique (tel qu'un câble électriquement conducteur, par exemple pour le raccordement électrique d'un capteur contenu dans l'enceinte, etc.),
- du canal (ou des canaux) de coulée 111, etc.

### 2.3. _Couvercle_

Le couvercle 3 est configuré pour coiffer l'ouverture supérieure de la cuve 11.

Le couvercle 3 permet de contenir les gaz, et notamment le composé gazeux d'oxyde de silicium (SiO) - formé lors de la réaction de carboréduction du quartz à l'intérieur de la cuve 11 du four à arc 1. Ceci permet de limiter les risques d'encrassement de l'enceinte 2, notamment au niveau de ses cloisons et du canal (ou des canaux) d'aspiration. Par ailleurs, le couvercle 3 permet de maintenir le four à arc 1 à une température (et plus précisément à un gradient de températures) favorisant la consommation des réactifs. On augmente ainsi le taux de réaction du dispositif, notamment vis-à-vis du dispositif de production de silicium décrit dans US 11 267 714.

Le couvercle 3 peut présenter une forme tronconique, une forme de dôme, ou une forme de disque. Le couvercle 3 peut être réalisé dans tout type de matériau d'isolation thermique réfractaire connu de l'homme du métier tel que du graphite.

Avantageusement, le couvercle 3 est mobile. Plus précisément, le couvercle 3 peut être déplacé entre :

- une position fermée dans laquelle le couvercle 3 recouvre totalement l'ouverture supérieure de la cuve 11 (les bords du couvercle 3 étant en contact avec les bords de l'ouverture supérieure dans la position fermée), et
- une position ouverte dans laquelle le couvercle 3 ne recouvre pas (ou recouvre partiellement) l'ouverture supérieure de la cuve 11.

Pour ce faire, un (ou des) arbre(s) de soutien (non représenté) du couvercle 3 peut (peuvent) être connecté(s) à un (ou plusieurs) moteur(s).

Le fait que le couvercle 3 soit mobile permet d'accéder à l'intérieur de la cuve du four à arc 1, par exemple :

- pour des opérations de maintenance du four à arc 1, et/ou
- pour charger/recharger l'intérieur de la cuve 11 en réactifs nécessaires à la réaction de carboréduction, et/ou
- pour favoriser l'évacuation de certains gaz produits lors de la réaction de carboréduction, etc.

Avantageusement, le couvercle 3 peut comprendre une (ou plusieurs) lumière(s) traversante(s) apte à être bouchée(s) par un (ou plusieurs) composant(s) d'obturation mobile(s). Cette (ou ces) lumière(s) traversante(s) forme(nt) une (des) conduite(s) d'échappement des gaz confinés dans une région définie entre la cuve 11 et le couvercle 3 (dans la position fermée).

### 2.4. _Principe de fonctionnement_

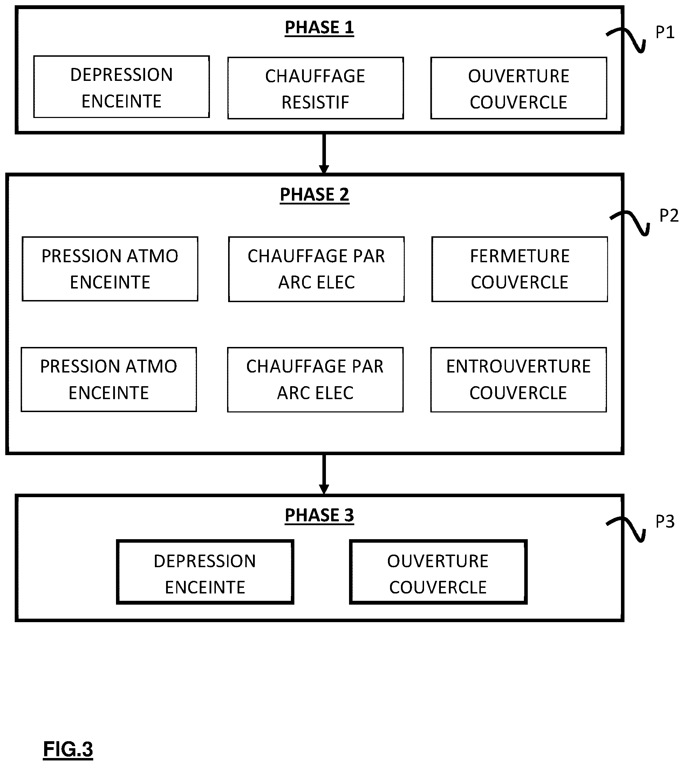

En référence à la figure 3, le principe de fonctionnement du dispositif de production de silicium de pureté 2N est le suivant.

On suppose qu'un mélange de matières premières contenant par exemple du quartz, et un agent réducteur, typiquement du carbone, a été préalablement positionné dans la cuve 11.

### 2.4.1. _Phase de pré-traitement_

Une phase de prétraitement P1 permettant l'initiation de la réaction de carboréduction ainsi que l'évacuation d'impuretés du mélange de matières premières est mise en oeuvre. Cette phase de prétraitement comprend les étapes :

- de génération d'une dépression dans l'enceinte étanche 2,
- de chauffage résistif (grâce à l'énergie transférée par les électrodes 12) du mélange de matières premières contenu dans la cuve 11, et
- d'ouverture du couvercle 3.

Durant cette phase de prétraitement P1, certaines impuretés sont volatilisées, celles ayant une pression de vapeur élevée. Le fait de générer une dépression dans l'enceinte, et d'ouvrir le couvercle tout en chauffant les matières premières permet de laisser s'échapper les impuretés hors de l'enceinte (celles-ci étant aspirées par la pompe d'aspiration).

### 2.4.2. _Phase de carboréduction_

Une fois cette phase de prétraitement P1 terminée (lorsque la température dans l'enceinte atteint 1000°C à 1500°C), une phase de carboréduction P2 est mise en oeuvre. Cette phase de carboréduction P2 comprend les étapes :

- de retour à une pression atmosphérique dans l'enceinte étanche 2,
- de fermeture du couvercle 3 et de chauffage par arc électrique du mélange contenu dans le four à arc 1 jusqu'à une température de carboréduction, et
- d'entrouverture du couvercle 3 et de maintien du chauffage par arc électrique du mélange.

Le fait de fermer le couvercle 3 et de générer un arc électrique dans le four à arc permet d'augmenter rapidement la température du mélange jusqu'à 1500 à 2000°C.

Une fois la température atteinte, le fait d'entrouvrir le couvercle 3 tout en maintenant le chauffage par arc électrique permet une dissipation thermique de la partie supérieure du milieu réactionnel : un gradient de température se crée alors dans le milieu réactionnel (température élevée au fond de la cuve 11 et moins élevée au niveau de l'ouverture supérieure de la cuve 11). Le fait de former un gradient de température dans la cuve 11 du four à arc permet la formation des différents intermédiaires réactionnels dans les différentes zones de température ainsi que les échanges gazeux entre elles pour une réaction de carboréduction efficace.

### 2.4.3. *Phase de post-traitement*

A la fin de la réaction de carboréduction P2, quand toutes les matières premières ont réagi et que le silicium liquide est formé dans la cuve 2, une phase de post-traitement P3 est initiée. Le couvercle 3 est complètement relevé. La mise en dépression de l'enceinte 2 est à nouveau réalisée pour permettre l'élimination des impuretés présentes dans le silicium liquide et qui ont une pression de vapeur élevée tel que le Phosphore, et un chauffage de type résistif est à nouveau mis en oeuvre.

A l'issue de la phase de post-traitement P3, la cuve 11 contient du silicium de pureté 2N à l'état liquide. Le canal (ou les canaux) de coulée 111 est (sont) ouvert(s) pour évacuer le silicium liquide de pureté 2N vers le dispositif de purification.

### 3. *Dispositif de purification*

Le dispositif de purification comprend :

- une poche de coulée 4 destinée à recevoir le silicium de pureté 2N issu du dispositif de production, et
- un brasseur électromagnétique 5 en aval de la poche de coulée 4, le brasseur électromagnétique 5 étant destiné à recevoir le silicium issu de la poche de coulée 4.

### 3.1. *Poche de coulée*

La poche de coulée 4 permet :

- d'une part de maintenir à l'état liquide, le silicium qu'elle contient, et
- d'autre part de filtrer, grâce à un filtre, des résidus (solides ou liquides) contenus dans le silicium 2N issu du dispositif de production.

La poche de coulée 4 comprend :

- un réservoir 41 délimité par un garnissage réfractaire et destiné à recevoir le silicium liquide de pureté 2N issu du dispositif de production,
- optionnellement, un système de chauffage 42 associé au réservoir 41 pour maintenir le silicium contenu dans le réservoir 41 à l'état liquide,
- une buse 43 d'injection de gaz débouchant dans une partie inférieure du réservoir 41,
- un filtre 44 disposé dans le réservoir 41, et
- un canal de sortie 45 pour le transfert du silicium contenu dans le réservoir 41 vers le brasseur électromagnétique 5.

### 3.1.1. *Réservoir*

Le réservoir 41 est de type connu en soit par l'homme du métier. Il comprend une base, une (ou plusieurs) cloison(s) latérale et un orifice de remplissage délimité par le(s) bord(s) de la (ou des) cloison(s) latérale(s) opposé(s) à la base.

En particulier, le réservoir 41 est composé d'une carcasse dans laquelle est disposé un garnissage en matériau réfractaire. A l'intérieur de ce garnissage est aménagée une cavité destinée à recevoir le silicium de pureté 2N issu du dispositif de production.

### 3.1.2. *Système de chauffage*

Le système de chauffage 42 peut être de type résistif ou de type inductif ou un bruleur à gaz.

Dans le mode de réalisation illustré à la figure 2, le système de chauffage 42 comprend une (ou plusieurs) résistance(s) en graphite disposée(s) dans une partie supérieure du récipient 41.

Dans certaines variantes de réalisation, le système de chauffage 42 peut également comprendre une (ou plusieurs) résistance(s) en graphite disposée(s) au niveau de la (ou des) cloison(s) latérale(s) du récipient 41. Ceci permet un meilleur contrôle de la température à l'intérieur du récipient 41 sur toute sa hauteur.

Le système de chauffage 42 peut également comprendre une (ou plusieurs) résistance(s) en graphite disposée(s) dans une partie inférieure du récipient 41, notamment sous la base du récipient 41.

Avantageusement, le système de chauffage est configuré pour maintenir le silicium liquide contenu dans le réservoir à une température supérieure à 1600°C, et de préférence supérieure ou égale à 1700°C.

Bien entendu, la poche de coulée peut également être dépourvue de système de chauffage pour limiter les coûts de production.

*3.1.3. Buse d'injection*

La buse d'injection 42 peut consister en une tuyère en graphite s'étendant en saillie vers l'intérieur du réservoir 41 à partir de sa base.

La buse d'injection 42 permet d'introduire du gaz - par exemple de l'air ou un mélange air/Oxygène (pour limiter les coûts de production) ou un gaz inerte - dans le silicium liquide contenu dans le réservoir 41 afin d'oxyder les impuretés typiquement Aluminium et Calcium. Avantageusement, le débit et la vitesse du gaz introduit dans le silicium liquide sont respectivement compris entre 2 et 10 Nm$^3$/h, et 0.1 et 1m/s. Avantageusement, la réaction de l'Oxygène du gaz avec le Silicium est exothermique donc elle permet de réchauffer le Silicium et éviter qu'il refroidisse trop vite ce qui induirait une solidification.

L'introduction du gaz permet d'éliminer certaines impuretés - calcium (Ca) et aluminium (Al) - contenues dans le silicium en fusion (réduction d'un facteur deux ou trois des concentrations initiales en Al et Ca contenues dans le silicium en fusion) en formant un laitier à la surface du silicium en fusion. En effet, l'oxygène réagit majoritairement avec l'aluminium et le calcium contenus dans le silicium en fusion, ce qui permet d'éliminer une portion importante de ces impuretés.

En particulier, le traitement par injection d'air (ou par injection d'un gaz inerte) permet d'obtenir un mélange composé de deux phases :

- un silicium affiné d'une part,
- un laitier contenant du calcium et de l'aluminium d'autre part,

le laitier s'étendant à la surface du silicium affiné.

Le laitier peut ensuite être séparé du silicium liquide affiné par toute technique connue de l'homme du métier, par exemple par décantation ou au moyen d'outils tels qu'un rabot.

La mise en oeuvre du brassage par injection de gaz permet d'obtenir un silicium affiné à l'état liquide dans lequel :

- la concentration en aluminium du silicium affiné est inférieure à 0.2% ([Al]<0.2%), et
- la concentration en calcium du silicium affiné est inférieure à 0.02% ([Ca]<0.02%).

*3.1.4. Filtre*

Le filtre 44 permet de retenir des impuretés contenues dans le silicium affiné pour obtenir un silicium liquide filtré destiné à être transféré dans le brasseur électromagnétique 5. A cet effet, le filtre 44 peut être logé dans le réservoir 41, entre l'orifice de remplissage et le canal de sortie 45 s'étendant au niveau de la base du récipient 41. Ainsi le filtrage des impuretés est réalisé lors de l'écoulement du silicium liquide vers le canal de sortie 44.

Ces impuretés peuvent être solides (matières premières n'ayant pas réagies, sous-produits générés lors de la réaction de carboréduction, etc.), ou liquides à forte viscosité (résidus de laitier contenu dans le silicium affiné liquide, etc...).

Le filtre peut être en céramique (préférentiellement en carbure de silicium SiC) et consister en un corps - tel qu'une plaque - incluant des pores. Avantageusement :

- l'épaisseur du corps peut être comprise entre 1 et 15 centimètres, préférentiellement entre 2 et 10 centimètres et encore plus préférentiellement entre 4 et 8 centimètres,
- le diamètre médian des pores peut être compris entre 75 micromètres et 3 millimètres, préférentiellement entre 100 micromètres et 2.5 millimètres, et encore plus préférentiellement entre 500 micromètres et 2 millimètres.

Ces dimensions du filtre 44 sont définies pour garantir une séparation efficace des impuretés tout en assurant un filtrage suffisamment rapide du silicium affiné pour éviter tout risque de solidification du silicium lors de ce filtrage.

*3.1.5. Canal de sortie*

Le canal de sortie 45 permet d'évacuer le silicium liquide filtré en dehors de la poche de coulée 4 en vue de son transfert dans le brasseur électromagnétique 5.

Dans certaines variantes de réalisation, le silicium liquide filtré se déverse du canal de sortie 45 dans un contenant intermédiaire - telle qu'une poche de coulée intermédiaire - préalablement à son introduction dans le brasseur électromagnétique 5. Dans d'autre variantes de réalisation, le silicium liquide filtré est solidifié rapidement dans une lingotière pour le purifier il faudra donc le refondre dans un four à induction avant de le transférer dans le brasseur électromagnétique.

*3.2. Brasseur électromagnétique*

Le brasseur électromagnétique 5 permet :

- d'une part de concentrer des impuretés dans la phase liquide du silicium par ségrégation, et
- d'autre part de produire une cloche de silicium de pureté 3N ou supérieure.

Le brasseur électromagnétique 5 comprend :

- un creuset 51 incluant une sole 511 et un (ou plusieurs) pan(s) 512 latéral (latéraux) dont le(s) bord(s) supérieur(s) opposé(s) à la sole 511 définit (définissent) une bouche d'entrée :

  ○ le creuset peut être composé de graphite pour permettre sa réutilisation,
  ○ l'angle entre la sole et le (ou les) pan(s) latéral (latéraux) peut être supérieur ou égal à 105° pour faciliter le démoulage de la cloche solidifiée de silicium produit,

- un (ou plusieurs) bobinage(s) inducteur(s) (non représenté) destiné à brasse, par induction, la charge de silicium contenue dans le creuset 51.

Comme indiqué précédemment, le brasseur électromagnétique 5 permet de purifier le silicium filtré issu de la poche de coulée 4.

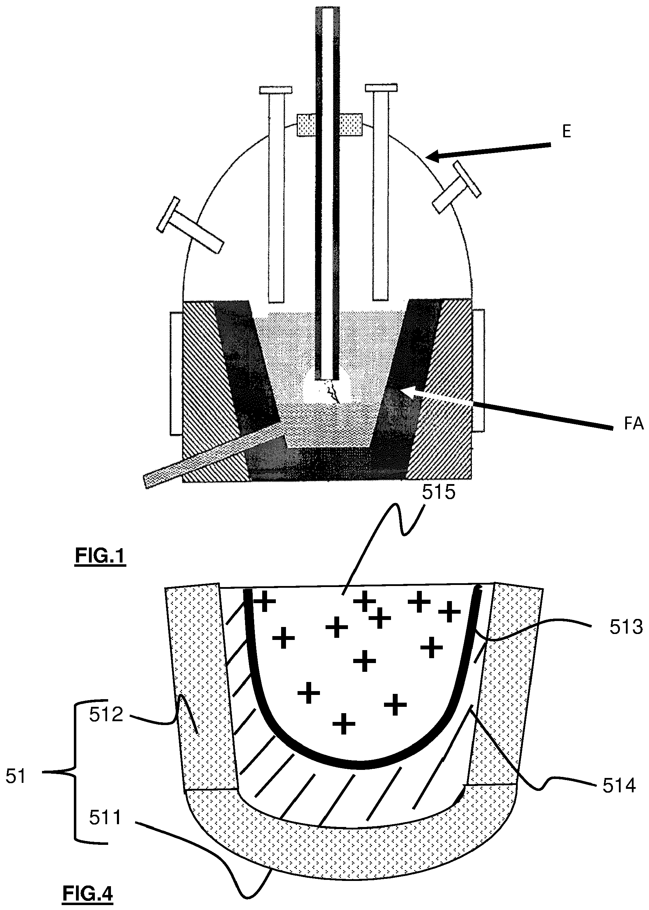

Pour purifier le silicium, une étape de solidification sous fort brassage est mise en oeuvre dans le brasseur électromagnétique 5. En référence à la figure 4, cette solidification s'effectue depuis la sole 511 du creuset 51 et des parois latérales du creuset vers la bouche selon un front de solidification (interface solide/liquide) 513 montant. Ce front de solidification 513 est fortement concave, la solidification du silicium s'effectuant à la fois par la sole 511 et par le(s) pan(s) latéral (latéraux) 512 du creuset 51.

La solidification permet d'obtenir une cloche de silicium solide purifié 514, et un résidu liquide de silicium impur 515 dans lequel la majorité des impuretés sont accumulées.

Cette accumulation des impuretés dans le résidu liquide de silicium impur est obtenue par ségrégation. La ségrégation est un phénomène physique se produisant lors de la solidification d'un matériau. Durant la solidification du matériau, la majorité des impuretés (notamment les métaux) est rejetée dans la phase liquide.

En effet la distribution des impuretés suit la loi de Scheil :

$$C_S = kC_o(1 - f_S)^{k-1}.$$

Avec $k = C_S/C_l$ le coefficient de ségrégation spécifique à l'impureté dans le Silicium. Le coefficient de ségrégation spécifique est connu par l'homme du métier et ne sera pas décrit plus en détails dans la suite.

Ainsi, durant la solidification du silicium, les impuretés restent préférentiellement dans la phase liquide 515. Ceci permet d'obtenir une cloche de silicium solide 514 de pureté 3N ou supérieure. Plus la fraction solide 514 augmente, et plus la concentration en impuretés dans la phase liquide 515 est importante.

Avantageusement, le phénomène de ségrégation peut être amélioré par un brassage efficace du bain de silicium à l'état liquide. Le brassage du bain de silicium liquide permet de renouveler la couche limite de liquide à l'interface solide/liquide, afin de favoriser le rejet des impuretés dans la phase liquide de silicium.

De préférence, ce brassage est obtenu grâce à un brasseur inductif permettant l'application d'un champ électromagnétique - alternatif ou tournant ou glissant - au bain de silicium liquide. Avantageusement, le brasseur inductif peut être alimenté par un courant alternatif ayant une fréquence comprise entre 1 et 100Hz, préférentiellement de l'ordre de 10Hz pour un creuset de 1 mètre de diamètre. Une telle fréquence d'alimentation permet en effet :

- de maximiser le brassage (vitesse du bain de silicium liquide > 1m/seconde) grâce à une pénétration importante du champ électromagnétique à l'intérieur du creuset 51, et
- de minimiser la chaleur transférée au bain de silicium liquide afin de favoriser une solidification rapide de la cloche de silicium (vitesse de solidification supérieure ou égale à 5 cm/h, préférentiellement supérieure ou égale à 10 cm/h).

En variante, ce brassage peut être obtenu grâce à un agitateur mécanique tel qu'une hélice en graphite plongée dans le bain de silicium liquide et entrainée en rotation par un arbre d'un moteur.

Le brasseur électromagnétique permet l'obtention d'une cloche 514 de silicium solide de pureté 3N ou supérieure et d'un résidu liquide de silicium impur 515 dans lequel la majorité des impuretés sont accumulées.

Le brasseur électromagnétique peut comprendre un système de refroidissement (non représenté) composé par exemple d'un (ou plusieurs) échangeur(s) thermique(s) dans lequel (lesquels) circule(nt) un fluide caloporteur. L'intégration d'un système de refroidissement permet de contrôler la vitesse de refroidissement de la cloche de silicium solide de pureté 3N ou supérieure jusqu'à la température ambiante. Le brasseur électromagnétique peut également être dépourvu de système de refroidissement spécifique.

### 4. Principe de fonctionnement

On va maintenant décrire le principe de fonctionnement du dispositif de purification en référence à la figure 4 qui illustre les étapes de bullage E1, de filtrage E2 et de solidification E3 d'un procédé de purification.

### 4.1. Bullage

Après avoir coulé le silicium liquide dans la poche de coulée 4 du dispositif de purification, un affinage (étape E1 de bullage) par injection d'air (ou tout autre gaz inerte) dans le bain de silicium contenu dans la cuve est mis en oeuvre.

L'affinage permet d'éliminer les impuretés courantes - telles que l'aluminium et le calcium - contenues dans le silicium liquide de pureté 2N issu du dispositif de production. Cette injection d'air est réalisée en utilisant la buse d'injection 42.

Sous l'effet du bullage, les impuretés courantes forment un laitier contenant de l'alumine, de la chaux et de la silice. Ce laitier surnage et est donc facile à éliminer en utilisant toute technique adaptée connue de l'homme du métier, telle qu'une technique par aspiration, par écrémage ou par décantation.

Avantageusement, le débit et la vitesse de l'air (ou du gaz inerte) introduit dans le bain de silicium liquide sont respectivement compris entre 2 et 10 m$^3$/h et 0.1 à 1m/s pour maximiser l'élimination des impuretés courantes.

Par ailleurs, la température du bain de silicium est maintenue supérieure ou égale à 1600°C, et de préférence supérieure ou égale à 1700°C. Ceci permet de garantir l'efficacité du filtrage réalisé postérieurement en limitant les risques de solidification inopportune de silicium dans le filtre 44 contenu dans la cuve 41. Une telle solidification risquerait en effet de boucher le filtre 44.

L'étape de bullage E1 permet d'obtenir un silicium liquide affiné dans lequel la concentration en impureté courante est réduite.

### 4.2. Filtrage

Sous l'effet de la gravité, le silicium liquide affiné se déplace vers le canal de sortie 45 de la poche de coulée 4.

Le silicium liquide affiné traverse le filtre 44 dont la dimension des pores empêche le passage des particules solides de dimensions supérieures à 75 μm. Ces particules solides (matières premières n'ayant pas réagies, sous-produits générés lors de la réaction de carboréduction, etc.) constituent des impuretés.

La rétention par le filtre 44 de ces impuretés solides permet donc d'améliorer la pureté du silicium liquide filtré ayant traversé le filtre.

A l'issue de l'étape de filtration, le silicium liquide filtré s'écoule dans le brasseur électromagnétique au travers du canal de sortie 45.

Le lecteur appréciera que les étapes de bullage et de filtration peuvent être mises en oeuvre simultanément.

### 4.3. Solidification

L'étape de solidification peut alors être initiée, de préférence sous fort brassage (vitesse du bain de silicium liquide > 1m/seconde). La présence d'un fort brassage permet d'éliminer le risque de défauts de ségrégation lié à l'accumulation d'impuretés au niveau du front de solidification.

L'étape de solidification est mise en oeuvre à une vitesse importante, en particulier supérieure ou égale à 5 cm/h, préférentiellement supérieure ou égale à 10 cm/h. Une solidification rapide permet en effet :

- d'une part de minimiser les coûts liés à la mise en oeuvre de cette étape de solidification (plus la solidification est rapide, plus son coût est réduit), et
- d'autre part de limiter la génération de déchets et l'énergie électrique consommée.

Lorsque la quantité de silicium souhaitée s'est solidifiée, l'étape de solidification est interrompue : une cloche de silicium solide purifié 514 et un résidu liquide de silicium impur 515 sont obtenus.

Ce résidu liquide de silicium impur 515 (i.e. liquide restant à l'issu de l'étape de solidification) est déversé par basculement du brasseur électromagnétique (rotation suivant l'axe z) dans une lingotière.

On retourne ensuite le creuset pour démouler et évacuer la cloche de Silicium.

### 5. Conclusions

L'appareil et le procédé décrits précédemment permettent d'obtenir une cloche de silicium solide purifié de pureté 3N ou supérieure.

Notamment, la présence d'un dispositif de purification permet d'éliminer de nombreuses impuretés contenues dans le silicium de qualité métallurgique obtenu en utilisant le dispositif de production illustré à la figure 2.

Le lecteur aura compris que de nombreuses modifications peuvent être apportées à l'invention décrite précédemment sans sortir matériellement des nouveaux enseignements et des avantages décrits ici.

**Revendications**

1. Appareil pour la production du silicium de pureté 3N ou supérieure, l'appareil comprenant un dispositif de production de silicium de pureté 2N incluant :

   ○ une enceinte (2) étanche raccordée à au moins une pompe d'aspiration pour générer une dépression à l'intérieur de l'enceinte (2) lorsque la pompe d'aspiration est activée,
   ○ un four à arc électrique (1) logé à l'intérieur de l'enceinte (2) étanche, le four à arc (1) incluant une cuve (11) pour contenir un mélange de matières premières, et un ensemble d'électrodes (12) configurées pour chauffer ledit mélange afin de produire le silicium de pureté 2N,

   *caractérisé en ce que* l'appareil comprend en outre un dispositif de purification pour l'obtention de silicium de pureté 3N, ledit dispositif de purification comportant une poche de coulée (4) et un brasseur électromagnétique (5) en aval de la poche de coulée :

- la poche de coulée (4) incluant :

o un réservoir (41) adapté pour contenir un bain de silicium à l'état liquide, ledit bain étant composé du silicium de pureté 2N issu du dispositif de production,
o une buse (43) d'injection pour injecter un gaz dans le bain de silicium à l'état liquide, l'injection du gaz permettant d'obtenir un silicium liquide affiné ayant une pureté supérieure au silicium de pureté 2N issu du dispositif de production,
o un filtre (44) disposé en amont du brasseur électromagnétique (5) pour filtrer le silicium liquide affiné, le filtrage permettant d'obtenir un silicium liquide filtré ayant une pureté supérieure au silicium liquide affiné, et

- le brasseur électromagnétique (5) étant configuré pour recevoir le silicium filtré liquide et pour le solidifier à une vitesse de solidification supérieure ou égale à 5 cm/h, préférentiellement supérieure ou égale à 10 cm/h, la solidification permettant d'obtenir une cloche de silicium solide purifié formant le silicium de pureté 3N ou supérieure.

2. Appareil selon la revendication 1, *dans lequel* le brasseur électromagnétique comprend un agitateur mécanique et/ou un brasseur inductif pour induire un déplacement du silicium filtré liquide à une vitesse supérieure ou égale à 1 m.s.

3. Appareil selon l'une quelconque des revendications 1 ou 2, *dans lequel* le filtre (44) comprend des pores dont les dimensions sont comprises entre 75 micromètres et 3 millimètres, préférentiellement entre 100 micromètres et 2.5 millimètres, et encore plus préférentiellement entre 500 micromètres et 2 millimètres.

4. Appareil selon l'une quelconque des revendications 1 à 3, *dans lequel* la poche de coulée inclut en outre un système de chauffage configuré pour maintenir le bain de silicium à l'état liquide contenu dans le réservoir (41) à une température supérieure ou égale à 1600°C, préférentiellement supérieure ou égale à 1700°C.

5. Appareil selon l'une quelconque des revendications 1 à 4, *dans lequel* la buse (43) est alimentée en gaz par une source d'alimentation configurée pour injecter ledit gaz à un débit compris entre 2 et 10m$^3$/h.

6. Appareil selon l'une quelconque des revendications 1 à 5, *dans lequel* le brasseur électromagnétique (5) est dépourvu d'isolant thermique pour induire le refroidissement du bloc de silicium solide purifié à une vitesse comprise entre 150°C/h et 500°C/h, préférentiellement comprise entre 200°C/h et 300°C/h.

7. Appareil selon l'une quelconque des revendications 1 à 6, *dans lequel* le dispositif de production de silicium de pureté 2N comprend en outre une unité de contrôle configurée pour :

- lors d'une étape de prétraitement :

o diminuer la pression à l'intérieur de l'espace clos à une valeur inférieure à la pression atmosphérique,
○ mettre en oeuvre un chauffage résistif du mélange de matières premières,

- lors d'une étape de carboréduction :

o augmenter la pression à l'intérieur de l'espace clos à une valeur sensiblement égale à la pression atmosphérique,
o mettre en oeuvre un chauffage par arc électrique du mélange de matières premières,
o puis lorsque la température du mélange est supérieure à 2000°C :

■ maintenir la pression à l'intérieur de l'espace clos à la valeur sensiblement égale à la pression atmosphérique,
■ maintenir le chauffage par arc électrique du mélange de matières premières,

- lors d'une étape de posttraitement :

o diminuer la pression à l'intérieur de l'espace clos à une valeur inférieure à la pression atmosphérique.

8. Procédé pour la production de silicium de pureté 3N ou supérieure, le procédé comprenant :

- une phase de production de silicium de pureté 2N à partir d'un dispositif de production incluant une enceinte (2) étanche raccordée à une pompe d'aspiration, et un four à arc électrique (1) logé à l'intérieur de l'enceinte (2) étanche, la phase de production comportant les étapes suivantes :

○ charger une cuve (11) du four à arc électrique (1) avec un mélange de matières premières,
○ générer une dépression à l'intérieur de l'enceinte (2) en activant la pompe d'aspiration,

o chauffer le mélange en utilisant un ensemble d'électrodes (12) du four à arc (1) de sorte à produire le silicium de pureté 2N,

*caractérisé en ce que* le procédé comprend en outre et une phase de purification pour l'obtention du silicium de pureté 3N à partir d'un dispositif de purification incluant une poche de coulée (4) et un brasseur électromagnétique (5) en aval de la poche de coulée (4), ladite phase de purification comportant les étapes suivantes :

- d'injection, en utilisant une buse (43) d'injection de la poche de coulée (4), d'un gaz dans un bain de silicium à l'état liquide composé du silicium de pureté 2N issu du dispositif de production, ledit bain étant contenu dans un réservoir (41) de la poche de coulée (4), l'injection du gaz permettant d'obtenir un silicium liquide affiné ayant une pureté supérieure au silicium de pureté 2N issu du dispositif de production,

- de filtrage, en utilisant un filtre (44) disposé en amont du brasseur électromagnétique (5), du silicium liquide affiné pour obtenir un silicium liquide filtré ayant une pureté supérieure au silicium liquide affiné, et

- de solidification, en utilisant le brasseur électromagnétique (5), du silicium filtré liquide à une vitesse de solidification supérieure ou égale à 5 cm/h, préférentiellement supérieure ou égale à 10 cm/h.

9. Procédé selon la revendication 8, *dans lequel* l'étape de solidification comprend une sous-étape consistant à brasser le silicium filtré liquide à une vitesse supérieure ou égale à 1 m.s.

10. Procédé selon l'une quelconque des revendications 8 ou 9, *dans lequel* l'étape de filtrage consiste à faire circuler le silicium liquide affiné au travers d'un filtre (44) ayant des pores dont les dimensions sont comprises entre 75 micromètres et 3 millimètres, préférentiellement entre 100 micromètres et 2.5 millimètres, et encore plus préférentiellement entre 500 micromètres et 2 millimètres.

11. Procédé selon l'une quelconque des revendications 8 à 10, *dans lequel* durant l'étape d'injection, le gaz est injecté dans le bain de silicium liquide à un débit comprise entre 2 et 10m$^3$/h.

12. Procédé selon l'une quelconque des revendications 8 à 11, *dans lequel* la phase de production de silicium de pureté 2N comprend les étapes suivantes :

- une étape de prétraitement incluant les sous-étapes consistant à :

o diminuer la pression à l'intérieur de l'enceinte à une valeur inférieure à la pression atmosphérique,

∘ mettre en oeuvre un chauffage résistif du mélange de matières premières,

- une étape de carboréduction incluant les sous-étape consistant à :

o augmenter la pression à l'intérieur de l'espace clos à une valeur sensiblement égale à la pression atmosphérique,

o mettre en oeuvre un chauffage par arc électrique du mélange de matières premières,

o puis lorsque la température du mélange est supérieure à 1500°C :

▪ maintenir la pression à l'intérieur de l'espace clos à la valeur sensiblement égale à la pression atmosphérique,

▪ maintenir le chauffage par arc électrique du mélange de matières premières,

- une étape de posttraitement incluant une sous-étape consistant à diminuer la pression à l'intérieur de l'espace clos.

**FIG.1**

**FIG.4**

**FIG.2**

**PHASE 1** — P1

| DEPRESSION ENCEINTE | CHAUFFAGE RESISTIF | OUVERTURE COUVERCLE |

**PHASE 2** — P2

| PRESSION ATMO ENCEINTE | CHAUFFAGE PAR ARC ELEC | FERMETURE COUVERCLE |
| PRESSION ATMO ENCEINTE | CHAUFFAGE PAR ARC ELEC | ENTROUVERTURE COUVERCLE |

**PHASE 3** — P3

| DEPRESSION ENCEINTE | OUVERTURE COUVERCLE |

**FIG.3**

BULLAGE ⟩ E1

FILTRAGE ⟩ E2

SOLIDIFICATION ⟩ E3

**FIG.5**

Europäisches
Patentamt

European
Patent Office

Office européen
des brevets

# RAPPORT DE RECHERCHE EUROPEENNE

**Numéro de la demande**

**EP 24 16 3470**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | WO 2017/024378 A1 (PYROGENESIS CANADA INC [CA]) 16 février 2017 (2017-02-16) <br> * revendications 1-50; figure 1 * <br> ----- | 1-12 | INV.<br>C01B33/021<br>C01B33/037 |
| Y | FR 3 116 527 A1 (COMMISSARIAT ENERGIE ATOMIQUE [FR]) 27 mai 2022 (2022-05-27) <br> * alinéa [0107]; revendications 1-15; figures 1-5 * <br> ----- | 1-12 | |
| Y | WO 03/010090 A1 (INVENSIL [FR]; BALUAIS GERARD [FR]; CARATINI YVES [FR]) 6 février 2003 (2003-02-06) <br> * revendications 1-13 * <br> ----- | 8-12 | |
| Y | US 2021/331929 A1 (SHENG ZHILIN [CN] ET AL) 28 octobre 2021 (2021-10-28) <br> * le document en entier * <br> ----- | 1-12 | |

**DOMAINES TECHNIQUES RECHERCHES (IPC)**

C01B

Le présent rapport a été établi pour toutes les revendications

| Lieu de la recherche | Date d'achèvement de la recherche | Examinateur |
|---|---|---|
| La Haye | 18 avril 2024 | Siebel, Eric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 24 16 3470

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-04-2024

| Document brevet cité au rapport de recherche | | Date de publication | Membre(s) de la famille de brevet(s) | | Date de publication |
|---|---|---|---|---|---|
| WO 2017024378 | A1 | 16-02-2017 | BR | 112018002538 A2 | 25-09-2018 |
| | | | CA | 2994466 A1 | 16-02-2017 |
| | | | CN | 108025917 A | 11-05-2018 |
| | | | EP | 3331825 A1 | 13-06-2018 |
| | | | KR | 20180090774 A | 13-08-2018 |
| | | | TW | 201713597 A | 16-04-2017 |
| | | | TW | 202317475 A | 01-05-2023 |
| | | | US | 2018237306 A1 | 23-08-2018 |
| | | | US | 2022363550 A1 | 17-11-2022 |
| | | | WO | 2017024378 A1 | 16-02-2017 |
| | | | ZA | 201801299 B | 29-06-2022 |
| FR 3116527 | A1 | 27-05-2022 | EP | 4247756 A1 | 27-09-2023 |
| | | | FR | 3116527 A1 | 27-05-2022 |
| | | | WO | 2022106675 A1 | 27-05-2022 |
| WO 03010090 | A1 | 06-02-2003 | AT | E382581 T1 | 15-01-2008 |
| | | | AT | E491668 T1 | 15-01-2011 |
| | | | BR | 0211193 A | 10-08-2004 |
| | | | BR | 0211195 A | 10-08-2004 |
| | | | CN | 1543435 A | 03-11-2004 |
| | | | CN | 1543436 A | 03-11-2004 |
| | | | DE | 60224394 T2 | 18-12-2008 |
| | | | EP | 1409405 A1 | 21-04-2004 |
| | | | EP | 1409406 A1 | 21-04-2004 |
| | | | ES | 2298390 T3 | 16-05-2008 |
| | | | ES | 2357501 T3 | 27-04-2011 |
| | | | FR | 2827592 A1 | 24-01-2003 |
| | | | JP | 4410847 B2 | 03-02-2010 |
| | | | JP | 4523274 B2 | 11-08-2010 |
| | | | JP | 2004535354 A | 25-11-2004 |
| | | | JP | 2004537491 A | 16-12-2004 |
| | | | NO | 335984 B1 | 13-04-2015 |
| | | | NO | 335985 B1 | 13-04-2015 |
| | | | US | 2005053539 A1 | 10-03-2005 |
| | | | US | 2005074388 A1 | 07-04-2005 |
| | | | WO | 03010090 A1 | 06-02-2003 |
| | | | WO | 03014019 A1 | 20-02-2003 |
| | | | ZA | 200400276 B | 30-03-2005 |
| | | | ZA | 200400346 B | 30-03-2005 |
| US 2021331929 | A1 | 28-10-2021 | CN | 111498852 A | 07-08-2020 |
| | | | US | 2021331929 A1 | 28-10-2021 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- US 11267714 B